Europäisches Patentamt

(19) European Patent Office

Office européen des brevets

(11) EP 0 574 642 B1

(12) EUROPEAN PATENT SPECIFICATION

(45) Date of publication and mention
of the grant of the patent:
28.10.1998 Bulletin 1998/44

(51) Int. Cl.⁶: **C01B 33/18**, C01B 33/141,
C01B 33/145, B01J 13/00,
G01N 30/48

(21) Application number: 92810471.0

(22) Date of filing: 19.06.1992

(54) **Procedure for the preparation of powders and suspensions of amorphous silicon dioxide microspheres**

Verfahren zur Herstellung von Pulvern und Suspensionen von amorphen Siliziumdioxidmikrokugeln

Procédé de préparation de poudres et de suspensions de microsphères de dioxyde de silicium amorphe

(84) Designated Contracting States:
AT BE CH DE FR GB IT LI NL SE

(43) Date of publication of application:
22.12.1993 Bulletin 1993/51

(73) Proprietor: CU CHEMIE UETIKON AG
CH-8707 Uetikon am See (CH)

(72) Inventors:
• Kovats, Ervin sz.
CH-1007 Lausanne (CH)
• Jelinek, Laszlo
CH-1024 Ecublens (CH)
• Erbacher, Christoph
CH-1028 Préverenges (CH)

(74) Representative:
Werffeli, Heinz R., Dipl.-Ing.ETH.
Postfach 275
Waldgartenstrasse 12
8125 Zollikerberg-Zürich (CH)

(56) References cited:
EP-A- 0 216 278          EP-A- 0 335 175
US-A- 4 983 369

• CHEMICAL ABSTRACTS, vol. 113, no. 10, 03
September 1990, Columbus, OH (US); p. 194, no.
81614e
• CHEMICAL ABSTRACTS, vol. 114, no. 12, 25
March 1991, Columbus, OH (US); p. 162, no.
105090e
• CHEMICAL ABSTRACTS, vol. 110, no. 8, 20
February 1989, Columbus, OH (US); p. 171, no.
60504s
• JOURNAL OF COLLOID & INTERFACE
SCIENCE, vol. 124, no. 1, July 1985, New York,
NY (US); S. COENEN et al., pp. 104-110

## Description

The present invention concerns a method for producing a slightly agglomerated but redispersable powder composed of nearly monosized, surface hydrated, compact, non-porous silicon dioxide microspheres.

## Background of the invention

Powders composed of compact, monosized spherical silicon dioxide microspheres would be of importance for different applications e.g. for model studies in colloid science, for standardization purposes, as starting material for surface modified adsorbents in chromatography, fine ceramics and model studies in material science, catalyst support etc.

Spherical monodispersed poly(silicic acid), PSA particles can be prepared in suspension according to the method of Stöber(1). Careful hydrolysis of tetraalkoxysilane with water in alcoholic solution with ammonia as a catalyst results a milky suspension of nearly monosized PSA-particles. Best results are obtained by using tetraethoxysilane in ethanol. The diameter of the final particles depends on the applied alcohol, on temperature and on the concentration of the reagents. In fact, the studies of Stöber and coworkers made it probable that nuclei of PSA are formed from the mono orthosilicic acid in the very first stage of the reaction and, after this spontaneous nucleation, polycondensation of monomers takes place exclusively at the surface of the particles. Thereby, the degree of polymerization and the microporosity of the PSA-particles depends on their growth rate i.e. of monomer flux at the surface (monomers arriving per unit surface area per unit time). In summary, by the method of Stöber nearly monosized microporous PSA-suspension could be prepared, where particle diameters ranged between 50 - 900 nm.

Subsequent reports on the Stöber polymerization (2,3,4,5,6,7) confirm that the formation of PSA-suspension occurs in two steps, the first being the nucleation of the orthosilicic acid monomers followed by the growth of the particles. Actually, for the second stage two mechanisms have been proposed, i: growth by addition of monomers at the particle surface and ii. continous formation of small subcritical particles and their deposition at the surface of the larger particles. Latest results seem to exclude the latter mehanism. All authors agree at present that by the Stöber reaction the limit of particle size is arround 1000 nm and that particles are microporous.

Two procedures have been proposed of particles larger than 1000 nm the first may be named the "stepwise growth" and the second the "continous growth". In the "stepwise growth" (2,8,9,10,11) first a PSA-suspension is prepared by the Stöber method with $d_p$ = 50 - 600 nm. To this suspension are then added further portions of tetraethoxysilane. The stoichiometry of the hydrolysis and the polymerization is described by

$$Si(OEt)_4 + (4 - 2x - \beta) H_2O = SiO_{2x}(OH)_{\alpha^{(OH)}}(OEt)_\beta(H_2O)_{\alpha^{(w)}} + (4 - \beta) EtOH \qquad (1)$$

where x is the degree of advancement of the polymerization, $\alpha^{(OH)}$ is the stoichiometric ratio of hydroxyl groups in the product, $\beta$ is that of the ethoxy groups finally, $\alpha^{(w)}$ is the stoichiometric ratio of water in micropores. Typical products have the composition

$$SiO_{1.8}(OH)_{0.3}(OEt)_{\beta,}(H_2O)_{\alpha^{(w)}} ; \qquad\qquad \alpha^{(w)} = 0.2 - 0.4 \qquad (2)$$

The stoichiometric ratio, $\beta$, is negligible (7). It is seen from eq 1 that in the reaction water is consumed and ethanol is produced. Therefore, it is necessary to give additional water together with the second and consecutive additions of tetraethoxysilane. In the "continous growth" procedure first a suspension of PSA-particles is prepared as before then tetraethoxysilane is introduced continously during a given period. Final particle diameters of 3000 nm have been acheived by both "regrowth" methods (10). As a general rule the relative standard deviation of the particles

$$\sigma_{rel} = \sigma_p / d_p \qquad (3)$$

becomes smaller during regrowth indicating the absence of a second nucleation in the presence of particles. Indeed, the number of particles remains constant after the nucleation step (7,8,10).

The nucleation step could be completely avoided applying commercial Ludox silica suspensions (12) as seed source (7,11). This highly concentrated suspension is composed of nearly compact PSA-spheres with particle diameters of $d_p$ = 20 - 30 nm in water stabilized with a small amount of $Na^+$ ions or ammonia. For use in regrowth experiments a seed source of defined particle concentration can be prepared by dilution of the commercial suspension where, on obvious reasons, ammonia stabilized Ludox is preferred as starting material. Using this seed source and adding a defined amount of tetraethoxysilane to the starting mixture composed of $H_2O/NH_3/EtOH$ the final diameter of the particles can be easily calculated fromm the mass balance by using eq 1 and an approximate density of $\rho_p \approx 1.9$ gcm$^{-3}$ for the final particle (7). During regrowth introduction of water is necessary as a secondary feed in order to maintain the necessary water concentration for hydrolysis. Also additional ammonia may be introduced with the secondary feed. In fact, the volume of the reaction mixture increases continously during regrowth. Therefore, ammonia concentration decreases if the secondary feed is pure water.

Literature reports concerning composition and structure of the PSA-microspheres are contradictory. The isolated product have been described to be compact silicon dioxide (6,10) and, by most authors, as microporous PSA of widely differing composition (9,15,16). The contradictions could partly be explained on the basis of a study from our laboratory. In fact, the skeleton of a microsphere is PSA [poly(silicic acid)] of varying composition having elemental formulae near $SiO_{1.8}(OH)_{0.4}$. The skeleton is microporous, water inclusions in micropores can be drained partly or completely by pumping _in vacuo_. With a treatment at 120 °C/10$^{-3}$ Torr micropores are completely void. Also the polymerization of the skeleton advances with heat treatment. Microporosity depended on the rate of growth of the spheres during preparation. Results indicated that at low growth rates microporosity was less and that the diameter of mitropores decreased, however, composition of the skeleton remained constant. Therefore, nitrogen adsorption isotherms at 77 K of vacuum dried product can be widely differing. In fact, BET evaluation of the isotherm of a product prepared at a higher growth rate may give a spcific surface area more than 50x of that calculated from particle diameter, whereas the specific surface area of products prepared at very low growth rates may be near the geomtric surface area. It is now obvious that elemental analysis data of the "dry" product depends on the method of preparation in the regrowth experiment but also on the method of isolation of the product from the suspension. The density of the material was observed to change in a wide range of $\rho_p = 1.8 - 2.1$ g cm$^{-3}$ (6,7,15,16) and weight losses of 5 - 20 % were observed on heating (6,7,16). The product can contain 0.15 - 2.5 % carbon (6,7,9,15) where higher carbon contents were only observed if the product was separated by evaporating the reaction mixture. Water loss from micropores is always reversible i.e. products with drained micropores will absorb the lost water in a humid atmosphere in a few hours (7).

Several reports describe surface modifications of the PSA microspheres with the aid of reagents added to the PSA-suspensions. Following the proposal of Unger at al. (10) hydrolysable alkyl silane derivatives can be added to the PSA-suspension where silanes hydrolyse and add to the silanols at the surface of the product. Following the proposal of van Helden (16) stearyl alcohol is added to the suspension and the liquid part of the reaction mixture is distilled off. During distillation surface silanols esterify with the non-volatile stearyl alcohol. Smits and coworkers (13) proposed surface modification with octadecyl alcohol, poly(isobutene) or $\gamma$-methacryloxy-propyltrimethoxysilane.

In neither report is given a detailed description of the isolation of the product from the final suspension. For different analyses (elemental analysis, thermogravimetry, adsorption isotherms etc.) the product must certainly have been isolated but agglomeration properties of the isolated products are never described. Following Gobet et al. (17) light powders of Aerosil could be isolated from water by freeze-drying. Wolter (18) proposed isolation of redispersable silica by adding tetramethylammonium hydroxide to the suspension _prior_ elimination of water by evaporation.

In our laboratory a method was developed for the production of compact silicon dioxide microspheres which can be redispersed in water or in polar organic solvents.

## Summary of the invention

It is a object of this invention to provide powders or suspension made of nearly monosized compact, amorphous silicon dioxide microspheres.

It is another object of this invention to provide a method for producing such particles in a state where they are slightly agglomerated and can be redispersed by conventional means in an approproate solvent to give a suspension of non-agglomerated microspheres.

A further object of this invention is to provide such particles by using a suspension of nearly monosized amorphous poly (silicic acid) (PSA) microspheres as starting material.

A further object of this invention is to isolate, dry and calcine PSA particles in a slightly agglomerated state, in a dry air atmosphere, which is redispersable in appropriate solvents to give suspensions of non-agglomerated microspheres.

A further object of this invention is to give a method for the surface hydration of calcined silicon dioxide particles to prepare a powder composed of slightly agglomerated surface hydrated silicon dioxide microspheres which are redispersable to give a suspension of non-agglomerated spheres.

A further object of this invention is to chemically surface modify the surface hydrated monospheres by appropriate reagents to produce powders composed of modified compact, amorphous silicon dioxide microspheres which are easily redispersable.

The method according the present invention is characterized by claim 1.

Preferred embodiments of the method according the present invention are object of the claims 2 to 20.

Object of the present invention is further a use of the product produced according to the present invention as starting material for surface modified adsorbents in chromatography.

**Detailed description**

By this process the silicon dioxide particles finally obtained are compact, nonporous particles having a spherical shape and near uniform size, they are in calcined, rehydrated and dried state and they are completely redispersable in a suitable medium. In addition, by surface modification of the above mentionned particles it is possible to obtain organically modified compact, nonporous silicon dioxide particles which are also redispersable in a suitable medium. The subject of this invention is, therefore, a multistep method for the preparation of compact, nonporous, spherical silicon dioxide particles which are in calcined, rehydrated and dried state and they are completely redispersable.

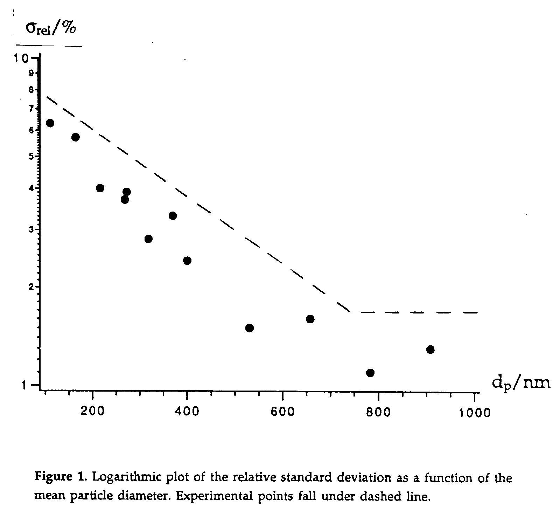

In a first stage a suspension of microporous poly(silicic acid) nearly monosized spherical particles is prepared by combination of different methods. The process starts with a continous or portionwise introduction of tetraalkoxysilane into a stirred water-ammonia-alcohol mixture which contains the desired number of commercial Ludox silica particles as seed source. The seed particles grow up to the desired, planned final diameter by polycondensation of the silicic acid monomer formed by hydrolysis of the tetraalkoxysilane in an aqueous, alcoholic, ammoniacal medium. The particles obtained in this step are nearly monodisperse, microporous and spherical particles with mean particle diameter of $d_p$ = 100 - 5000 nm and a relative standard deviation of less than that shown in Fig 1. Parallel to the tetraalkoxysilane also a water-ammonia or a water-ammonia-alcohol mixture may be introduced continously or portionwise into the reaction mixture in order to maintain favorable conditions to the hydrolysis and polycondensation. Suitable alcohols used in this step are aliphatic $C_1$ - $C_5$ alcohols, where methanol or ethanol are preferred. Tetraalkoxysilanes used in this step include all the orthosilicate esters of aliphatic alcohols, where tetraethoxysilane is preferred. The commercial Ludox or similar particles as seed source can be replaced with *in situ* produced PSA-particles, by introducing tetraalkoxysilane into a water-ammonia-alcohol mixture.

The starting reaction mixture used in this step contains about 1 - 5 mol l$^{-1}$ of ammonia, 2 - 12 mol l$^{-1}$ of water. For the *in situ* seed-preparation the same composition can be applied. The reaction temperature used in this step is between 10 - 60 °C, where temperatures arround 25 °C are preferred, also for *in situ* seed-preparation.

In the second stage of the procedure the PSA-particles are separated from the liquid part of the reaction mixture then the isolated solid is dried to give a slightly agglomerated but redispersable powder. Different techniques can be used for the isolation of the solid product such as filtration, sedimentation in a centrifuge and by evaporation of the liquid. A first preferred procedure consists of separation of the solid by centrifugation at as low centrifugal force as just necessary for pelleting, redispersion in distilled water under the action of ultrasonic irradiation, freezing the suspension as a layer in a round bottom flask and removing the water by freeze drying at 10$^{-1}$ Torr/-20 °C. The product is obtained as a slightly agglomerated (but easily redispersable) crust at the wall of the flask. A second preferred procedure consists of adding a few percent of higher boiling polar organic compound to the suspension such as butanol - 1, octadecanol - 1, dibutylether etc. and of removing the liquid by evaporation in a rotary evaporator. The evaporation can also be done without of such an additive especially with suspensions of larger particles (>250 nm). The product is obtained, as before, as a slightly agglomerated crust. The round bottom flask is now connected to a vacuum line and is evacuated to 10$^{-3}$ Torr where in the trap protecting the pump a quantity of water is found, corresponding to about 5 - 15 % of the weight of the product. Pumping is now continued and the temperature of the flask is elevated stepwise or continously, where the pressure of water vapor in the flask must remain less than 2 Torr. At a final temperature, chosen in the range of 80 - 350 °C, preferably at 120 °C, the product is pumped to arrive a final pressure of 10$^{-3}$ Torr. Micropores of this this product are now nearly completely drained and the product is ready for calcination.

The product is now transferred to an airtight rotating reactor by avoiding contact with humid air during transfer. The rotating reactor is continously swept by a flow of dry air, the flowrate is carefully regulated to a maximal value where tha particles are not blown out from the reactor. The temperature of the reactor oven is now regulated to the final temperature of the pre-drying then stepwise or continously the temperature of the oven is elevated to a final temperature of 800 - 1100 °C. Care must be taken that water vapor pressure in the reactor remains as low as possible i.e. water liberated during polymerization of the PSA-skeleton be always swept out by the dry air flow. At a final temperature of preferably 900 - 980 °C the powder is heated for an additional period of 2 - 20 h in order to complete sintering of micropores. If calcination is made in an atmosphere not containing oxygen the final product is grey due to carbon inclusions.

After calcination in dry air the the product is composed of compact silicon dioxide spheres having a specific BET-surface area 1.1 - 1.5 times larger than that calculated from particle diameter. The surface of the particles is dehydrated to a high degree and for further use it is advantageous to rehydrate the particles. Therefore, the calcined products are redispersed in distilled water to give a suspension of 1 - 20 % by weight where suspensions of 5 % are preferred. The gently stirred suspension is heated under reflux at 75 - 95 °C during 24 - 72 h or in an autoclave at temperatures of 110 - 160 °C for a shorter period. The suspension is now cooled and the product is isolated as before but without additive. Sedimentation analysis of the redispersed final product: 97 % monospheres, 2 % dimers, 1 % trimers.

For surface modification by silylation the rehydrated product is dispersed in a non-protic polar organic solvent such as acetonitril, silylating agent is added where any known silylating agent can be applied which does not react with the used solvent. The suspension is heated under reflux during the necessary period then cooled and the product is separated. The silylation is not complete under these conditions, therefore it is preferred to "end-cap" the partly silylated product. Treatment with the dimethylamino derivative of the silylating agent applied in the first treatment results completely dense surface layers are obtained.

**Example 1**

*Preparation of microporous monosized poly(silicic acid) microspheres with nominal diametre of $d_p$ = 650 nm.* In a polypropylene reactor (500ml) equipped with two introduction capillaries (stainless steel id. 0.12 mm) and a polypropylene stirrer was placed a solution of 5.77 g (0.34 mol) ammonia, 25.22 g (1.4 mol) water in 132.75 g (2.88 mol) abs. ethanol. The composition of this initial reaction mixture was: $[NH_3]$ = 1.7 mol $l^{-1}$; $[H_2O]$ = 7.0 mol $l^{-1}$. Following reagents were prepared: A: Ludox AS-40 from DuPont (Wilmington, DE) was diluted with distilled and filtered water to give a suspension of Ludox-particles having a concentration of $c^{(n)}$ = 6.8 $\cdot$ $10^{17}$ particles $kg^{-1}$; B: Freshly distilled tetraethoxysilane (TES) for the primary feed; C: A solution of ammonia in water with $[NH_3]$ = 5.18 mol $l^{-1}$ to be used as secondary feed.

The gently stirred (~100 RPM) starting reaction mixture was now thermostated at 25.0±0.1°C and 162 mg of the diluted Ludox was added (containing 1.1 $\cdot$ $10^{14}$ particles of 27 nm diameter) and introduction of tetraethoxysilane was started at a flow rate of 0.37 ml $min^{-1}$ under the level of the reaction mixture. After a period 6 min solution C was introduced by means of the second capillary at a flow rate of 0.15 ml min-$^1$ above the level of the reaction mixture in order to keep the composition of the liquid part of the reaction mixture nearly constant during particle growth. The primary feed was stopped after 4 h 16 min and the secondary feed 6 min later. The suspension was let to react for further 3 h then transferred into a round bottom flask and the solvent eliminated at 40 °C/20 Torr in a rotary evaporator. The product was as a slightly agglomerated crust in the flask: 30.3 g.

The total amount of TES introduced was 89 g. Supposing an average composition of $SiO_{1.53}(OH)_{0.34}(H_2O)_{0.3}$ the final diameter of the produced particles, calculated from mass balance with $\rho_{prod}$ = 1.9 g $\cdot$ $cm^{-3}$, is $d_p$ = 650 nm by assuming that the number of particles did not change during regrowth. A sample of the product was equilibrated with an atmosphere of relative humidity of 50 % at 22 °C. This product showed a weight loss of 6.9 % on drying at 120 °C/10$^-$$^3$ Torr and elemental analysis gave: H: 1.53 %, C: 0.92 %. Supposing, that on drying water is lost from micropores, the composition of the product is calculated a $SiO_{1.527}(OH)_{0.389}(OEt)_{0.027}(H_2O)_{0.265}$. Particle diameter measured by transmission electron microscopy was $d_p$ = 634 nm with a relative standard deviation of 2.0 %. In water the product could be redispersed under the action of ultrasonic irradiation during 6 min to give a suspension containing separate, monomeric spheres. Sedimentation analysis: 98% monosphers, 2% dispheres.

*Preparation of silicon dioxide microspheres by calcination.* The microporous product was prepared for calcination by the following procedure. The flask was transferred to a vacuum line and was evacuated at 20 °C to 10$^{-2}$ Torr (~8 h) then the temperature was raised to 40 °C and pumped until a pressure of 10$^{-2}$ Torr was attained. The procedure was repeated at 60 °C, 80 °C, 100 °C and 120 °C (total 24 h). The final dry product could be saturated to the original composition by equilibrating with water vapor at 22 °C in air at relative humidity of 50 %. In water it could be redispersed to a suspension containing mainly monomeric spheres under the action of ultrasound during 6 min. Sedimentation analysis: 97% monosphers, 3% dispheres. BET-evaluation of the $N_2$-isotherm at 77K of the powder dried at 120 °C/10$^{-3}$ Torr gave a specific surface area of $s_{BET}$ = 6.8 $m^2g^{-1}$.

The product dried at 120 °C/10$^{-3}$ Torr was transferred to an air-tight tubular rotating vitrous quartz reactor (i.d = 8 cm; L = 30 cm; 5 RPM). The product was heated at 120°C in a stream of dry air (less than 2 ppm $H_2O$) with a flow rate of 22 ml$^{NTP}$ min$^{-1}$, then the temperature was slowly (2 h) and gradually raised to 250 °C. When water elimination at this temperature ceased (further 2 h) the temperature was raised slowly (12 h) and gradually to 900 °C and kept at this value during 24 h. After cooling the dry powder could be redispersed in water (ultrasonic irradiation during 6 min). Sedimentation analysis: 96 % monosphers, 3 % dispheres and 1 % higher agglomerates. Particle diameter by electron microscopy: $d_p$ = 630 nm with a relative standard deviation of 2.2 %; specific surface area from $N_2$-isotherm at 77 K: $s_{BET}$ = 4.8 $m^2g^{-1}$ (calculated from the diameter: $s_{geom}$ = 4.3 $m^2g^{-1}$).

*Surface hydrated silicon dioxide microspheres.* The calcined product was redispersed in the twentyfold mass of distilled water (ultrasonic irradiation, 6 min) and the gently stirred suspension was heated at 90 °C for 72 h. The surface hydrated product was isolated by elimination of the water in a rotary evaporator at 40 °C/20 Torr then dried at 120 °C/10$^-$$^3$ Torr. The product, a white powder, could be easily redispersed in water (ultrasound, 6 min) to give a colloidal suspension containing mainly monomeric spheres. Sedimentation analysis: 98 % monosphers, 1 % dispheres and 1 % higher agglomerates.

**Example 2**

*Preparation of microporous monosized poly(silicic acid) microspheres with nominal diameter of $d_p$ = 1590 nm.* In a double walled glass reactor of 600 ml was placed a mixture of 2.89 g (0.17 mol) ammonia, 12.61 g (0.70 mol) water and 68.3 g (1.48 mol) ethanol. The gently stirred mixture was thermostated at 25.0±0.1 °C and 166 mg of the diluted Ludox was added corresponding to $1.72 \times 10^{13}$ particles. Composition of the starting mixture: $[NH_3] = 1.70$ mol $l^{-1}$; $[H_2O] = 7.00$ mol $l^{-1}$. Introduction of tetraethoxysilane was started at a flow rate of 0.37 mol $min^{-1}$ then 6 min later a secondary feed ($[NH_3] = 5.18$ mol $l^{-1}$ in water) at a flow rate of 0.15 ml $min^{-1}$. Total 206.85 g (0.99 mol) of tetraethoxysilane and 85.67 g of aqueous ammonia were introduced during 591 min. The reaction mixture was left to react for additional 3 h and the solid was isolated by centrifugation (3000 RPM, 4 min). The liquid was decanted, the solid redispersed in water (600 ml) then centrifuged. After repeated redispersion in 100 ml of water the milky suspension was frozen in a 2 l round bottom flask and the water was eliminated by freeze-drying at -20°C/$10^{-1}$ Torr.

Particle diameter of the product was determined by transmission electron microscopy to give $d_p = 1570$ nm with a relative standard deviation of 1.8 %. Sedimentation analysis of a sample redispersed in water (ultrasonification, 6 min) gave: 99 % monospheres, 1 % dispheres.

*Preparation of silicon dioxide microspheres by calcination.* The flask containing the crust of slightly agglomerated PSA-microspheres was transferred to the vacuum line amd pumped until pressure decreased to $10^{-2}$ Torr (10 h). Temperature was raised in steps of 20 K whilst pumping where pressure was never allowed to attain more than $10^{-1}$ torr. Finally, spheres were dried at 120 °C during 12 h at $10^{-3}$ Torr.

The dried product was completely redispersable in water or ethanol as monospheres. A sample was equilibrated with water vapor at 22 °C in humid air (relative humidity: 50 %). Water uptake corresponded to 7.1 % of the equilibrated sample. Elemental analysis of the saturated sample gave 0.11 % carbon and 1.38 % hydrogen to give a composition of $SiO_{1.537}(OH)_{0.383}(OEt)_{0.003}(H2O)_{0.270}$. The BET-surface area of the non-equilibrated sample was $s_{BET} = 3.96$ $m^2$ $g^{-1}$.

For calcination a quantity of 52 g of the pre-dried powder was placed into the rotating vitrous quartz reactor and gradually heated from the starting temperature to 900 °C during 18 h then heated at this temperature during 24 h by maintaining a dry air flow rate of 32 $ml^{NTP}$ $min^{-1}$ during the whole procedure.

The spheres after calcination had a particle diameter of 1560 nm as determined by transmission electron microscopy. The BET-surface area was $s_{BET} = 2.44$ $m^2$ $g^{-1}$ as compared with $s_{geom} = 1.77$ $m^2$ $g^{-1}$. Sedimentation analysis of the calcined powder redispersed in water gave: 96 % monospheres, 3 % dispheres and 1 % trispheres.

*Surface hydrated silicon dioxide microspheres.* A quantity of 40 g of the calcined product was redispersed in 660 ml of distilled water under the action of ultrasonic irradiation during 6 min. The suspension was heated at 90 °C for 72 h then the mixture was cooled and the solid was isolated by centrifugation and freeze-drying. The product was finally dried at 120 °C/$10^{-3}$ Torr.

BET-surface area of the surface hydrated spheres was the same as that of the calcined product. The calcined, rehydrated and dried powder could be completely redispersed in water or ethanol.

## 3 Further examples

Several powders were prepared following the procedure described. Aliquots of the calcined and surface rehydrated end product were treated with tetradecydimethyl(dimethylamino)silane (C14) and with (5-cyano-3,3-dimethylpentyl)dimethyl(dimethylamino)silane (PCN) in boiling acetonitrile and end-capped with the same silylating agent in a sealed ampoule at 180 °C. Properties of the prepared products are summarized in the following Table.

| Nominal $d_p$ (nm) | 650[a] | 990 | 1300 | 1590[b] | 1900 |
|---|---|---|---|---|---|
| *Isolated product (before calcination) equilibrated with 50% relative humidity* | | | | | |
| Diameter (nm)[c] | 634 | 980 | 1309 | 1570 | 1880 |
| $\sigma_{rel}$ (%) | 2.0 | 2.0 | 1.1 | 1.8 | 1.6 |
| Water loss at 120 °C (%) | 6.7 | 6.0 | 6.2 | 7.1 | 10.0 |
| Carbon (%)[d] | 0.92 | 0.90 | 0.97 | 0.11 | 0.17 |
| Hydrogen (%)[d] | 1.53 | 1.71 | 1.80 | 1.38 | 1.96 |
| *Calcined product* | | | | | |
| Diameter (nm)[c] | 630 | 981 | 1290 | 1560 | 1850 |
| $\sigma_{rel}$ (%) | 2.2 | 1.2 | 1.7 | 1.9 | 1.9 |
| $s_{BET}$ ($m^2\,g^{-1}$) | 5.41 | 3.91 | 2.94 | 2.45 | 1.97 |
| $s_{geom}$ ($m^2\,g^{-1}$) | 4.33 | 2.78 | 2.11 | 1.75 | 1.47 |
| $\Gamma_{C14}$ ($\mu mol\,m^{-2}$)[e] | 4.6 | 4.2 | 4.3 | 4.2 | 4.3 |
| $\Gamma_{PCN}$ ($\mu mol\,m^{-2}$)[e] | 4.4 | 4.0 | 4.1 | 4.1 | 4.0 |

[a] product from Example 1
[b] product from Example 2
[c] determined by transmission electron microscopy
[d] determined by elemental analysis data
[e] surface concentration of the end-capped material calculated from elemental analysis and the BET surface area

## Claims

1. A method of producing a slightly agglomerated but redispersable powder composed of nearly monosized, surface hydrated, compact, non-porous silicon dioxide microspheres, where after dispersion the microspheres of the powder are suspended as monospheres, from a suspension of nearly monosized, microporous microspheres of poly(silicic acid) as sorting material prepared by hydrolysis of tetraethoxysilane, where latter is introduced continously or portionwise into a reaction mixture composed of a methanolic or ethanolic solution of 1-5 mol $l^{-1}$ ammonia and 2-12 mol $l^{-1}$ water containing a well defined number of seed particles in the range of $10^{15}$-$10^{20}$ $l^{-1}$, in performing the following operations:

    - isolation of the poly(silicic acid) particles by either evaporating the liquid portion of the suspension or by sedimenting the particles by means of a low centrifugal field to give a wet powder redispersable to a extent of more than 96%,

    - drying the wet powder under vacuum by slowly elevating the temperature to 120°C to give a slightly agglomerated dry powder of poly(silicic acid) microspheres redispersable with a yield higher than 96%,

    - calcining the dry powder composed of microporous poly(silicic acid) microspheres in a dry gas stream by slowly elevating the temperature up to 900 - 980°C, to give a slightly agglomerated powder composed of non-porous, surface dehydrated silicon dioxide microspheres redispersable to an extent of more than 96%,

    - rehydrating the surface of the calcined particles in a water suspension of 1 - 20 weight percent at 90°C and isolating the suspended product which gives after drying a slightly agglomerated powder composed of surface hydrated; non-porous, compact silicon dioxide microspheres redispersable with a yield of higher than 96%.

2. A method according to claim 1, where isolation of the microporous poly(silicic acid) microspheres from the suspension is made by evaporation of the liquid part of the reaction mixture at 40°C/20 Torr to give an agglomerated but redispersable thin layer crust.

3. A method according to claim 2, where prior evaporation a few percent of a higher boiling polar organic compound is given to the reaction mixture, whereby the use of 1-5% butanol-1 or pentaol-1 is preferred.

4. A method according to claim 1, where during drying of the isolated, wet, microporous poly(silicic acid) microspheres in vacuo the temperature is elevated stepwise or continously up to 80 - 350°C, whilst continously pumping off the water liberated from micropores under the action of temperature.

5. A method according to claim 4, where during drying the pressure of water liberated from the micropores of the poly(silicic acid) microspheres never exceeds 1 Torr.

6. A method according to claim 5, where drying is made at pressures less than 0.1 Torr.

7. A method according to claim 5 and 6, where the drying is done in a stream of dry gas in which the partial water pressure never exceeds the values cited in claims 5 and 6.

8. A method according to claim 1, where calcination of the product composed of microporous poly(silicic acid) microspheres, dried according to claim 7 is done in vacuo by stepwise or continously elevating the temperature up to 800-1000°C, whilst contionusly pumping off the water liberated during the transformation of poly(silicic acid) microspheres to compact, non-porous silicon dioxide microspheres; end temperatures of 900-1000°C are preferred.

9. A method according to claim 8, where calcination is done in a stream of dry air.

10. A method according to claim 8, where calcination is done in dry, oxygen free atmosphere to give a gray powder.

11. A method according to claims 8, 9 and 10 to redisperse the slightly agglomerated calcined powder in water or polar organic solvents under the action of ultrasonic irradiation.

12. A method according to claim 11, where redispersion is made by vigorous shaking during 20 - 30h.

13. A method according to claims 11 and 12, where the surface of the calcined particles is rehydrated by hearing the redispersed clacined product in water to give suspensions of 1-20% by weight, where a suspension concentration of 5% is preferred at temperatures of 85-95°C for a period of at least 8h.

14. A method according to claim 13, where surface rehydration of calcined particles is made in an autoclave at temperatures 110-160°C for a period of 1-15h.

15. A method according to claims 13 and 14 to isolate the surface rehydrated powder by evaporating the water in a rotary evaporator, then drying the powder at 120°C in vacuo.

16. A method according to claim 15, where isolation from the suspension is made by freeze-drying the water, then drying at 120°C in vacuo.

17. A method according to claims 15 and 16, where the surface rehydrated, dried powder is redispersed in a non-protic solvent and partially silylated in suspension.

18. A method according to claim 17, where the partially silylated powder is completely silylated by known methods.

19. A method according to claims 17 and 18, where the dried, surface hydrated powder is redispersed in a silylating agent and complete silylation is made in one step.

20. A method according to claim 19, where monofunctional trialkyl-(dimethylamino)silane or a silylating agent where one of the alkyl groups substitued with a polar function are used as silylating agents at temperatures of 140-300°C, preferentially at temperatures of 150-180°C.

21. Compact, monosized silicon dioxide microspheres manufactured by one or more of the claims 1 to 20.

**22.** A use of the product according to claim 21 for model studies in colloid science.

**23.** A use of the product according to claim 21 as adsorbent in chromatography.

**24.** A use of the product according to claim 21 as starting material for surface modified adsorbents in chromatography.

**Patentansprüche**

**1.** Verfahren zur Herstellung eines leicht agglomerierten aber redispergierbaren Pulvers, zusammengesetzt aus beinahe gleichgrossen, mit einer hydratisierten Oberfläche versehenen, dichten, nicht porösen Siliziumdioxid-Mikrokugeln, wobei die Mikrokugeln nach Dispersion dieses Pulvers als isolierte Einkugelteilchen suspendiert sind aus einer Suspension von nahezu gleichgrossen mikroporösen Polykieselsäure-Mikrokugeln als Ausgangsmaterial, hergestellt durch Hydrolyse von Tetraethorysilan, das entweder kontinuierlich oder diskontinuierlich in ein Reaktionsgemisch, zusammengesetzt aus einer Losung von 1-5 Mol.$l^{-1}$ Ammoniak und 2-12 Mol.$l^{-1}$ Wasser in Aethanol oder Methanol und eine genau bestimmte Zahl zwischen $10^{15}$ und $10^{20}$ je Liter Keimteilchen enthaltend, eingeleitet und wie folgt weiter verarbeitet wird:

- Abtrennen der Polykieselsäure-Teilchen entweder durch Verdampfen des flüssigen Teils der Suspension oder durch Bildung eines Sediments in einem niedrigen Zentrifugalfeld und bilden eines feuchten Pulvers, das über 96% redispergierbar ist,

- Trocknen des feuchten Pulvers durch langsames Erwärmen unter Vakuum bis 120°C zum Erhalt eines leicht agglomerierten, trockenen Pulvers aus Polykieselsäure-Mikrokugeln, welches über 96% redispergierbar ist,

- das trockne Pulver zusammengesetzt aus mikroporösen Polykieselsäure-Mikrokugeln zum Erhalt eines leicht agglomerierten Pulvers bestehend aus nicht porösen, an der Oberfläche dehydratisierten und mit einer Ausbeute von mehr als 96% redispersibelen Siliziumdioxid-Mikrokugeln, in einem trockenen Gasstrom durch langsames Erhitzen bis auf 900-980°C kalziniert, und

- die Oberfläche der kalzinierten Teilchen in einer wässrigen Suspension von 1-20 Gew.-% bei 90°C rehydratisiert, und das suspendierte Produkt abtrennt, welches nach Trocknung ein leicht agglomeriertes Pulver zusammengesetzt aus beinahe gleichgrossen, dichten, nicht porösen Siliziumdioxid-Microkugeln mit einer hydratisierten Oberfläche, ergibt, und welches über 96% redispergierbar ist.

**2.** Verfahren nach Anspruch 1, bei dem die mikroporöse Polykieselsäure-Mikrokugeln zum Erhalt einer agglomerierten aber redispergierbaren dünnen Kruste aus der Suspension durch Abdampfen der flüssigen Komponenten des Reaktionsgemisches bei 40°/20 Torr abgetrennt werden.

**3.** Verfahren nach Anspruch 2 bei dem vor dem Abdampfen einige Prozente einer polaren, höhersiedenden organischen Verbindung, vorzugsweise 1-5% 1-Butanol oder 1-Pentanol, mit dem Reaktionsgemisch vermischt werden.

**4.** Verfahren nach Anspruch 1, bei dem wahrend der Vakuumtrocknung der feuchten mikroporösen Polykieselsäure-Mikrokugeln die Temperatur entweder schrittweise oder kontinuierlich bis auf 80-350°C erhöht wird, wahrend das Wasser, das während des Erhitzens aus den Mikroporen freigesetzt wird, kontinuierlich durch Evakuierung entfernt wird.

**5.** Verfahren nach Anspruch 4, bei dem der Partialdruck des wahrend der Trocknung durch Erhitzen aus den Mikroporen der Polykieselsäure-Mikrokugeln freigesetzten Wassers niemals höher als 1 Torr ist.

**6.** Verfahren nach Anspruch 5, bei dem während des Trocknens der Druck niedriger als 0.1 Torr ist.

**7.** Verfahren nach den Ansprüchen 5 und 6, bei dem die Trocknung in einem trockenen Gasstrom durchgeführt wird und der Partialdruck des Wassers niemals höher ist als die in den Ansprüchen 5 und 6 erwähnten Werte.

**8.** Verfahren nach Anspruch 1, bei dem die Kalzinierung des Produkts das aus nach Anspruch 7 getrockneten mikroporösen, Polykieselsäure-Mikrokugeln zusammengesetzt ist, in Vakuum durchgeführt wird und die Temperatur kontinuierlich oder diskontinuierlich auf 800-1000°C, vorzugsweise bis auf Endtemperaturen von 900-1000°C, gesteigert wird, und Wasser das wahrend der Bildung von dichten, nicht porösen Siliziumdioxid-Mikrokugeln aus porösen Polykieselsäure-Mikrokugeln gebildet wird, durch kontinuierliches Pumpen entfernt wird.

9.  Verfahren nach Anspruch 8 bei dem die Kalzinierung in einem Strom trockener Luft durchgeführt wird.

10. Verfahren nach Anspruch 8, bei dem die Kalzinierung in einer trockenen, an Sauerstoff freien Atmosphäre durchgeführt wird, um ein graues Pulver zu erhalten.

11. Verfahren nach den Ansprüchen 8,9 und 10, bei dem das leicht agglomerierte kalzinierte Pulver mittels Ultraschallwellen in Wasser oder in polaren organischen Lösungsmitteln redispergiert wird.

12. Verfahren nach Anspruch 11 bei dem die Redispersion mittels wahrend 20-30 Stunden kräftigen Schüttelns erreicht wird.

13. Verfahren nach den Ansprüchen 11 und 12, bei dem die Oberfläche der kalzinierten Teilchen durch während mindestens 8 Stunden Erhitzen des in Wasser redispergierten und kalzinierten Produkts bei Temperaturen von 85-95C rehydratisiert wird, und die Konzentration des kalzinierten Produkts in den Suspensionen während der Rehydratisierung 1-20 Gew.-% beträgt und vorzugsweise 5 Gewichtsprozente ist.

14. Verfahren nach Anspruch 13 bei dem die Rehydratisierung der Oberfläche der kalzinierten Teilchen in einem Autoklaven während 1-15 Stunden bei Temperatur von 110-160°C durchgeführt wird.

15. Verfahren nach den Ansprüchen 13 und 14, bei dem das an der Oberfläche rehydratisierte Pulver durch Verdampfen des Wassers in einem rotierenden Verdampfer und Trocknen des erhaltenen Pulvers in Vakuo bei 120°C abgetrennt wird.

16. Verfahren nach Anspruch 15, bei dem die Abtrennung aus der Suspension durch Gefriertrocknen des Wassers und Trocknen in Vakuum bei 120C erfolgt.

17. Verfahren nach den Ansprüchen 15 und 16, bei dem das an der Oberfläche rehydratisierte, getrocknete Pulver in einem aprotischen Lösungsmittel dispergiert und in Suspension teilweise siliiert wird.

18. Verfahren nach Anspruch 17, bei dem das teilweise silisierte Pulver mittels bekannter Verfahren völlig silisiert wird.

19. Verfahren nach den Ansprüchen 17 und 18, bei dem das getrocknete, an der Oberfläche rehydratisierte Pulver in einem Sililierungsmittel redispergiert und die komplette Sililierung in einem Schritt durchgeführt wird.

20. Verfahren nach Anspruch 19 bei dem entweder monofuktionelles Trialkyl-(dimethylamino)silan oder aber ein Sililierungsmittel, in dem eine der Alkylgruppen einen polaren Substituenten enthalt, bei Temperaturen von 140-300°C, vorzugsweise bei Temperaturen von 150-180°C, als Sililierungsmittel verwendet wird.

21. Dichte, nahezu gleichgrosse Siliziumdioxid-Mikrokugeln, hergestellt nach einem oder mehreren der Ansprüchen 1 bis 20.

22. Verwendung des Produkts nach Anspruch 21 bei Modellstudien in der Kolloidforschung.

23. Verwendung des Produkts nach Anspruch 21 als Adsorbent in der Chromatographie.

24. Verwendung des Produkts nach Anspruch 21 als Ausgangsmaterial zur Herstellung von an der Oberfläche modifizierten Adsorbentien in der Chromatographie.

**Revendications**

1.  Procédé de préparation d'une poudre légèrement agglomérée, mais apte à être remise en dispersion, composée de microsphères non poreuses compactes de dioxyde de silicium, hydratées en surface et possédant une dimension pratiquement unique, dans lequel, après dispersion, on met les microsphères de la poudre en suspension sous forme de monosphères, à partir d'une suspension de microsphères microporeuses d'acide polysilicique de dimension pratiquement unique, comme matière de départ préparée par hydrolyse du tétraéthoxysilane, dans lequel on introduit ce dernier en continu ou par portions dans un mélange réactionnel composé d'une solution méthanolique ou éthanolique de 1-5 moles $l^{-1}$ d'ammoniac et de 2-12 moles $l^{-1}$ d'eau contenant un nombre bien défini de particules d'ensemencement dans le domaine de $10^{15}$-$10^{20}$ $l^{-1}$ en mettant en oeuvre les opérations ci-après:

- isolation des particules d'acide polysilicique, soit par évaporation de la portion liquide de la suspension, soit par précipitation des particules au moyen d'un faible champ centrifuge pour obtenir une poudre humide apte à être remise en dispersion à concurrence de plus de 96%,

- sécher la poudre humide sous vide en élevant lentement la température à 120°C pour obtenir une poudre sèche légèrement agglomérée de microsphères d'acide polysilicique apte à être remise en dispersion avec un rendement supérieur à 96%,

- calciner la poudre sèche composée de microsphères microporeuses d'acide polysilicique dans un courant de gaz sec en élevant lentement la température jusqu'à 900-980°C pour obtenir une poudre légèrement agglomérée composée de microsphères non poreuses de dioxyde de silicium déshydratées en surface, apte à être remise en dispersion jusqu'à concurrence de plus de 96%,

- réhydrater la surface de particules calcinées dans une suspension aqueuse de 1-20% en poids à 90°C et isoler le produit mis en suspension qui fournit, après séchage, une poudre légèrement agglomérée composée de microsphères non poreuses compactes de dioxyde de silicium hydratées en surface, apte à être remise en dispersion avec un rendement supérieur à 96%.

2. Procédé selon la revendication 1, dans lequel l'isolation des microsphères microporeuses d'acide polysilicique de la suspension est réalisée par évaporation de la partie liquide du mélange réactionnel à 40°C/20 torr pour obtenir une croûte en couche mince agglomérée, mais apte à être mise en dispersion.

3. Procédé selon la revendication 2, dans lequel, avant l'évaporation, on ajoute au mélange réactionnel quelques pour cent d'un composé organique polaire à point d'ébullition plus élevé, l'utilisation de butanol-1 ou de pentanol-1 à concurrence de 1 à 5% étant préférée.

4. Procédé selon la revendication 1, dans lequel, au cours du séchage sous vide des microsphères microporeuses d'acide polysilicique humides isolées, on élève la température graduellement ou en continu jusqu'à 80-350°C, tout en éliminant en continu par pompage l'eau libérée des micropores sous l'action de la température.

5. Procédé selon la revendication 4, dans lequel, au cours du séchage, la pression de l'eau libérée des micropores des microsphères d'acide polysilicique ne dépasse jamais 1 torr.

6. Procédé selon la revendication 5, dans lequel on procède au séchage sous des pressions inférieures à 0,1 torr.

7. Procédé selon les revendications 5 et 6, dans lequel on procède au séchage dans un courant de gaz sec dans lequel la pression d'eau partielle ne dépasse jamais les valeurs indiquées dans les revendications 5 et 6.

8. Procédé selon la revendication 1, dans lequel on effectue la calcination du produit composé de microsphères microporeuses d'acide polysilicique séchées conformément à la revendication 7, sous vide, graduellement ou en continu, en élevant la température jusqu'à 800-1000°C, tout en éliminant par pompage en continu l'eau libérée au cours de la transformation des microsphères d'acide polysilicique en microsphères de dioxyde de silicium non poreuses compactes; des températures finales de 900-1000°C sont préférées.

9. Procédé selon la revendication 8, dans lequel on procède à la calcination dans un courant d'air sec.

10. Procédé selon la revendication 8, dans lequel on réalise la calcination dans une atmosphère sèche exempte d'oxygène pour obtenir une poudre grise.

11. Procédé selon les revendications 8, 9 et 10, pour remettre en dispersion la poudre calcinée légèrement agglomérée, dans de l'eau ou dans des solvants organiques polaires sous l'action d'une exposition à un rayonnement ultrasonore.

12. Procédé selon la revendication 11, dans lequel on réalise la remise en dispersion en agitant vigoureusement pendant un laps de temps de 20 à 30 heures.

**13.** Procédé selon les revendications 11 et 12, dans lequel on soumet la surface des particules calcinées à une réhydratation en chauffant dans de l'eau le produit calciné remis en dispersion pour obtenir des suspensions de 1-20% en poids, une concentration de la suspension de 5% étant préférée à des températures de 85-95°C pendant un laps de temps d'au moins 8 heures.

**14.** Procédé selon la revendication 13, dans lequel on procède à la réhydratation de la surface des particules calcinées dans un autoclave, à des températures de 110-160°C, pendant un laps de temps de 1 à 15 heures.

**15.** Procédé selon les revendications 13 et 14, pour isoler la poudre réhydratée en surface en évaporant l'eau dans un évaporateur rotatif, puis en séchant la poudre à 120°C sous vide.

**16.** Procédé selon la revendication 15, dans lequel on procède à l'isolation à partir de la suspension par lyophilisation de l'eau, puis en séchant à 120°C sous vide.

**17.** Procédé selon les revendications 15 et 16, dans lequel on remet la poudre séchée réhydratée en surface en dispersion dans un solvant non protique et on la soumet à une silylation partielle en suspension.

**18.** Procédé selon la revendication 17, dans lequel on soumet la poudre partiellement silylée à une silylation complète par des procédés connus.

**19.** Procédé selon les revendications 17 et 18, dans lequel on remet la poudre séchée hydratée en surface en dispersion dans un agent de silylation et on procède à une silylation complète en une seule étape.

**20.** Procédé selon la revendication 19, dans lequel on utilise, à titre d'agents de silylation, des trialkyl(diméthylamino)silanes monofonctionnels ou encore un agent de silylation dans lequel un des groupes alkyle a été remplacé par une fonction polaire, à des températures de 140-300°C, de préférence à des températures de 150-180°C.

**21.** Microsphères compactes de dioxyde de silicium à dimension unique fabriquées par une ou plusieurs des revendications 1 à 20.

**22.** Utilisation du produit selon la revendication 21, pour des études modèles dans la science des colloïdes.

**23.** Utilisation du produit selon la revendication 21, comme adsorbant dans la chromatographie.

**24.** Utilisation du produit selon la revendication 21, comme matière de départ pour des adsorbants en chromatographie, ayant subi une modification en surface.

**Figure 1.** Logarithmic plot of the relative standard deviation as a function of the mean particle diameter. Experimental points fall under dashed line.